# EUROPEAN PATENT APPLICATION

(11) **EP 3 001 767 A1**
(43) Date of publication of application: **30.03.2016**
(21) Application number: 14290287.3
(22) Date of filing: 25.09.2014
(51) Int. Cl.: H04W 80/06, H04L 12/851, H04L 29/06, H04W 60/00

(54) **METHOD AND APPARATUS OF MAINTAINING A TRANSMISSION CONTROL PROTOCOL TCP SESSION**

(71) Applicant: ALCATEL LUCENT, 92100 Boulogne-Billancourt (FR)
(72) Inventor: Fahldieck, Torsten, 70435 Stuttgart (DE)
(74) Representative: Sarup, David Alexander

(57) **Abstract**

A method is provided of maintaining a Transmission Control Protocol, TCP, session between a mobile user terminal and a network, comprising: in a first phase, the mobile user terminal being connected to the network via both a wireless cellular communications link and a WiFi link and user data being sent via the WiFi link at a first rate; in a second phase, the mobile user terminal being connected to the network node via a wireless cellular communications link but not a WiFi link; wherein in the second phase, user data is sent via the wireless cellular communications link at a second rate that is both lower than the first rate and high enough to maintain the TCP session.

## Description

### Field of the Invention

The present invention relates to telecommunications, in particular to wireless telecommunications.

### Description of the Related Art

In mobile cellular telecommunication networks, for example of Long Term Evolution (LTE) or Fifth Generation (5G) wireless networks, an increasing number of small cell base stations, for example picocell base stations and femtocell base stations, are deployed to improve coverage and traffic capacity. Small cell base stations usually have small footprints similar in size to WiFi access points.

There is a trend for small cell base stations to incorporate multiple wireless access technologies, for example a cellular telecommunications technology, such as LTE or 5G, and a wireless Local Area Network (LAN) interface, such as Wi-Fi. Such a base station is often referred to as a base station-access point, BS-AP.

Furthermore mobile user terminals, for example smartphones and laptops, increasingly incorporate multiple wireless access technologies for example WiFi in addition to LTE or 5G. In the cellular telecommunications field, a mobile user terminal is often referred to as a User Equipment, UE.

Where both the small cell base stations and the mobile user terminals support multiple wireless access technologies, it is appropriate to simultaneously transfer data between the BS-AP and UE over the multiple technologies. In the example where both WiFi and a mobile communication technology, namely LTE or 5G, are supported, this is known as "WiFi offload". Here the WiFi radio link acts to help the mobile communication system (LTE or 5G,) in data transfer. This WiFi offload may happen under the control of the mobile communication system.

### Summary

The reader is referred to the appended independent claims. Some preferred features are laid out in the dependent claims.

An example of the present invention is a method of maintaining a Transmission Control Protocol, TCP, session between a mobile user terminal and a network, comprising: in a first phase, the mobile user terminal being connected to the network via both a wireless cellular communications link and a WiFi link and user data being sent via the WiFi link at a first rate; in a second phase, the mobile user terminal being connected to the network node via a wireless cellular communications link but not a WiFi link; wherein in the second phase, user data is sent via the wireless cellular communications link at a second rate that is both lower than the first rate and high enough to maintain the TCP session.

Some embodiments provide a way to keep a TCP session alive which has low QoS constraints, when moving out of the coverage area of a WiFi access point.

Some embodiments are performed at Layer 2, in a way that is transparent to higher layers of the TCP/IP protocol stack.

Some embodiments relate to Layer 4 connection preservation for heterogeneous carrier aggregation.

Some embodiments provide a method of providing a TCP session. Some embodiments provide so-called "WiFi offload" when possible as the mobile user terminal moves. Good data rate, reliability, and user experience is provided whilst radio resources on cellular interfaces are used efficiently.

Some embodiments provide good reliability of WiFi offloads.

Some embodiments are suitable for small cell deployments, particularly as mobile user terminals with multiple wireless technologies are becoming increasingly available.

Preferably, the TCP session is defined at Layer 4 of the TCP/IP protocol stack model, and the wireless cellular link and WiFi link are defined at a lower layer in the protocol stack transparent to the TCP session definition.

Preferably in a third phase, the mobile user terminal is connected to the network node via both a wireless cellular communications link and a WiFi link and user data is sent via the WiFi link at a rate higher than the second rate.

Preferably the wireless cellular communications link is Long Term Evolution, LTE, or Fifth Generation, 5G, compliant.

Preferably the network comprises a macrocell base station and at least one WiFi access point, the wireless cellular communications link passes via the macrocell base station and the or each WiFi link passing via one of the WiFi access points.

Preferably the TCP session has a Best Effort, BE, Quality of Service, QoS, constraint.

Preferably the second phase is entered dependent upon determining that the WiFi link no longer has an acceptable signal quality.

Preferably the second phase is entered dependent upon determining that the WiFi link no longer has an acceptable channel capacity.

Examples of the present invention also relate to corresponding apparatus.

Another example of the present invention relates to a controller configured to maintain a Transmission Control Protocol, TCP, session between a mobile user terminal and a network, comprising: means to configure, in a first phase, the mobile user terminal to be connected to the network via both a wireless cellular communications link and a WiFi link and user data being sent via the WiFi link at a first rate; means to configure in a second phase, the mobile user terminal to be connected to the network via a wireless cellular communications link but not a WiFi link; wherein in the second phase, user data is sent via the wireless cellular communications link at a second rate that is both lower than the first rate and high enough to maintain the TCP session.

Preferably the controller operates at the Medium Access Control Layer of the TCP/IP Protocol stack.

Preferably the controller is configured to determine whether a WiFi link of acceptable signal quality is available, and dependent upon the result of that determination the WiFi link is configured.

Preferably the controller is configured to determine whether the WiFi link has an acceptable level of channel capacity, and dependent upon the result of that determination the WiFi link is configured. Preferably the controller is configured to determine dependent on the channel capacity of the wireless cellular communications link whether to configure the WiFi link.

Preferably the controller comprises a Forwarding Management Entity. Preferably the controller comprises a macrocell base station.

### Brief Description of the Drawings

An embodiment of the present invention will now be described by way of example and with reference to the drawings, in which:
Figure 1 is a diagram illustrating a TCP/IP protocol stack as implemented in a known system (PRIOR ART)
Figure 2 is a diagram illustrating a cellular telecommunications network according to a first embodiment of the invention,
Figure 3 is a diagram illustrating the TCP/IP protocol stack used in the network shown in Figure 2,
Figure 4 is a diagram illustrating how a moving mobile user terminal is connected in the network shown in Figure 2 at three time periods , where (a) is at a first time period, (b) is at a later second time period , and (c) is at an even later third time period, and
Figure 5 illustrates the level of data transferred via cellular (e.g. LTE or 5G) technology) and via WiFi, in the network shown in Figure 2, in each of those three time periods denoted (a), (b) and (c).

### Detailed Description

When considering a known system where there is "WiFi offload", in which a WiFi radio link acts to help the mobile communication system (LTE or 5G) in data transfer, the inventor realised that, the cellular wireless (LTE,5G) and WiFi radio physical links are controlled at the MAC layer.

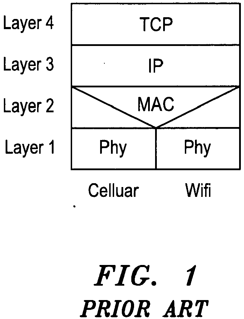

In this known system, integration of Cellular and WiFi Physical Layers (Layer 1) occurs at the MAC layer (Layer 2) as shown in Figure 1. This is often referred to as Layer 2 Integration.

As also shown in Figure 1, the data flow uses a Transmission Control Protocol (TCP) connection. This connection is initiated by an application (not shown) running on a user terminal (not shown). This TCP connection has a low Quality of Service (QoS) constraint, for example Best Effort (BE), suitable for uploading or downloading bulk data of low time sensitivity.

The inventor realised that, in this known system, when a user terminal leaves the range of a WiFi access point (not shown), the WiFi connection is torn down and then later following a TCP time out, the TCP connection is terminated. Furthermore, the application encounters an error condition, for example where data transfer is aborted. A user then has to reinitiate the application, or restart the data transfer, whereby the previously transmitted and received data is discarded. This may result in a bad user experience and wastage of radio resources because of aborted file transfer and consequential retransmission of data.

The inventor realised that an alternative approach was possible, an example of which is described as follows.

### Network

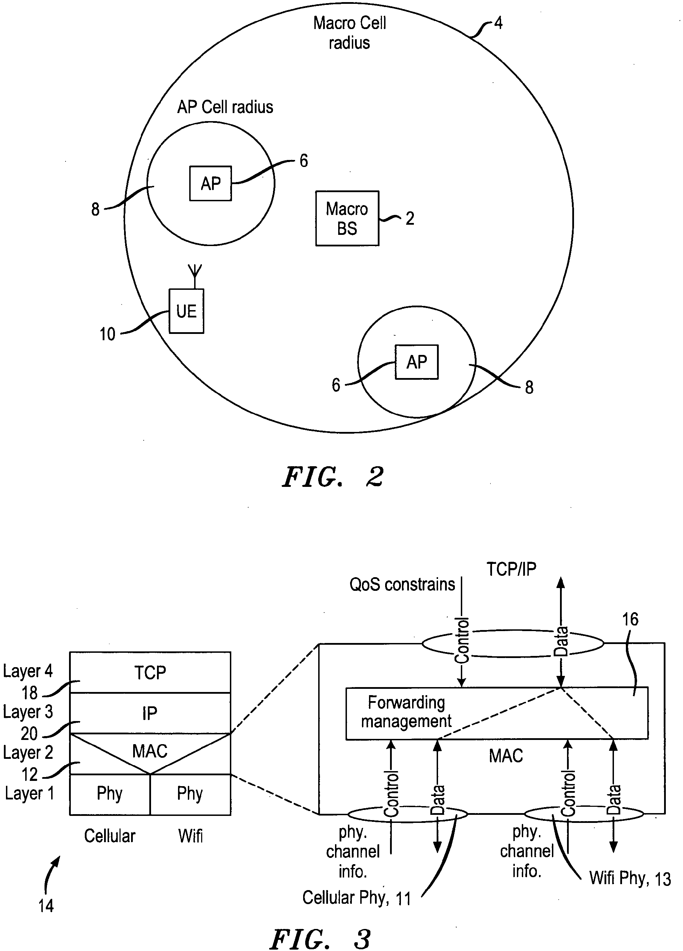

As shown in Figure 2, an example network for cellular wireless communications includes a macrocellular base station 2 that provides a radio coverage area 4 known as a macrocell. This provides cellular radio coverage of Long Term Evolution (LTE) or 5G type.

Within the macrocell, WiFi access points (AP) 6 are deployed. These have smaller coverage areas 8 than the macrocell 4.

Mobile user terminals, for example smartphones and laptops, increasingly incorporate multiple wireless access technologies for example both WiFi and LTE/5G. There are often many within a macrocell at any time. For simplicity, one mobile user terminal 10 of "dual mode" type is shown in Figure 2.

As shown in Figure 3, the user terminal may be connected to the network via one or both of a cellular (LTE/5G) physical channel 11 to the macrocellular base station 2 and a WiFi physical channel 13 to one of the access points 6. This is done at the Medium Access Control (MAC) layer 12 of the protocol stack 14 used, by a Forwarding Management Entity 16, under the control of QoS constraints that are set at the Transmission Control Protocol/Internet Protocol (TCP/IP) layers 18, 20.

It will be understood that the Forwarding Management entity 16 is a logical entity. In this example, its functionality is provided by the macrocellular base station 2. In some other embodiments (not shown) the forwarding management entity may be provided at one or more WiFi access points.

### Process

Basically, when the user terminal 10 leaves the WiFi cell 8, the data flow of the TCP connection is handed over from connection with the WiFi access point 6 to connection with the macrocellular base station 2; in other words from via the WiFi interface (not shown) of the user terminal to via the cellular radio interface (not shown) of the user terminal. The WiFi connection is torn down.

Due to the low QoS constraint applied to the TCP data flow, the data rate of the cellular radio connection to reduced to a minimum to fulfil the conditions to keep the TCP connection alive.

Upon the user terminal entering a further WiFi access point cell 8, a WiFi connection between the user terminal and that further access point 8 is established. Then the TCP data flow is directed via that WiFi connection and the TCP data rate is again increased above the minimum.

This data flow control is done by the Forwarding Management Entity 16, at the Medium Access Control (MAC) layer 12 of the protocol stack 14 used, subject to the QoS constraint that is set at the Transmission Control Protocol/Internet Protocol (TCP/IP) layers 18, 20.

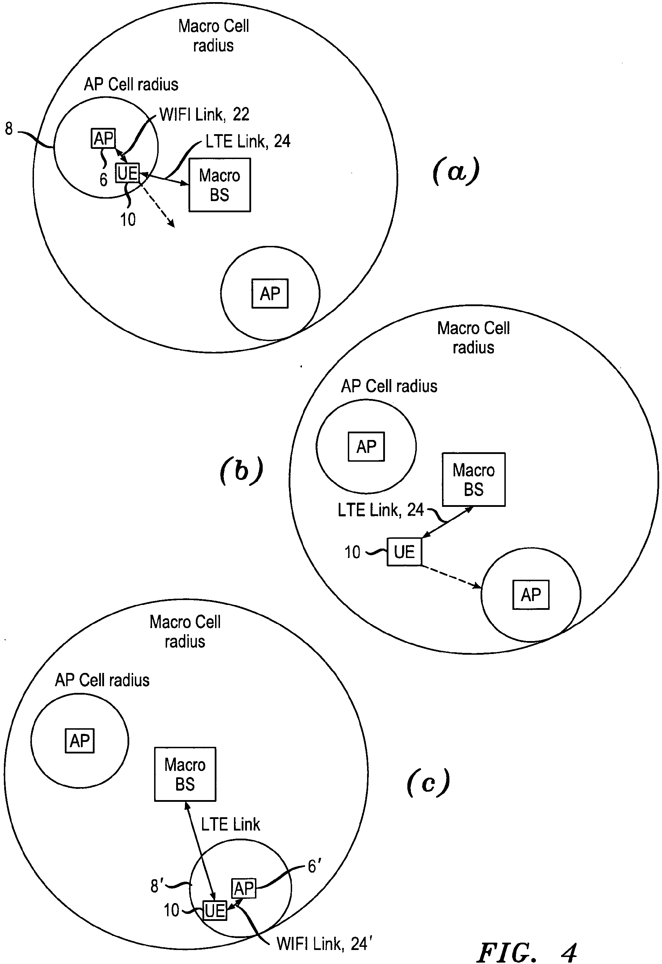

We now describe this process in more detail with reference to Figure 4.

### User Data via Initial WiFi link

As shown in Figure 4(a), a TCP connection with the user terminal 10 is set up in which the forwarding managing entity 16 that controls Layer 2 (here the MAC layer) decides to transfer data via the WiFi access point 8.

This decision is made dependent upon the forwarding management entity 16 determining that the user terminal is within the cell 8 of a WiFi access point to which sufficient channel quality is available. The decision is possible due to the low Quality of Service (QoS) requirement ('QoS constraint') of the TCP data flow. The QoS constraint is defined by the application or the user which initiated the TCP data flow. The QoS constraint is transmitted via a service access point (SAP, not shown) between the MAC layer 12 and higher layers 18, 20 shown in Figure 3.

Physical channel information is also considered in making this decision whether or not to forward the TCP data via the WiFi access point 6. This physical channel information comes from the cellular and wireless physical layer (Layer 1 as shown in Figure 3). This physical channel information describes the actual channel capacities of the particular wireless links, namely the WiFi link and the cellular link.

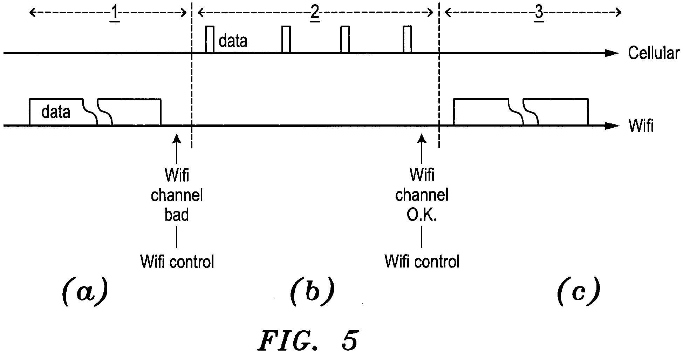

The forwarding management entity 16 initiates two logical Layer 2 connections, one via the WiFi link 22 and one via the cellular link 24. The WiFi link 22 is configured as have a Best Effort (BE) QoS constraint so may consume all available radio resources. The cellular link 24 is used as a standby connection having a signalling bit rate sufficient for continuity of the TCP connection. Data is passed via the WiFi link 22 as shown in Figure 4(a) and 5(a).

### User Data via Cellular link

As the user terminal 10 leaves the cell 8 of the WiFi access point 6, the channel capacity of the WiFi link becomes zero. The Forwarding management entity 16 controlling the MAC layer is informed of this via the physical WiFi channel 13. Specifically, the physical layer of the WiFi channel sends channel information to the forwarding management entity 16 via a Service Access Point, which is between the WiFi physical layer and the MAC layer 12. In consequence the forwarding management entity 16 decides to handover the data traffic of this TCP connection to the cellular link 24.

The situation is then as shown in Figure 4(b) and 5(b), namely with data is transferred at a minimal rate via the cellular link 24.

As previously mentioned, due to the low QoS constraint applied to the TCP data flow, the data rate of the cellular radio connection is reduced to a minimum to fulfil the conditions to keep the TCP connection alive.

In one example, this rate may be 1 kilobit per second, in bursts of 10milliseconds every hundred milliseconds.

### User Data via further WiFi link

At a later time, as shown in Figure 4(c), the user terminal 10 then enters the cell 8' (in other words radio coverage area) of a further WiFi access point 6'.

The forwarding management entity 16 is then informed by the WiFi physical layer of information of the WiFi physical channel 13, specifically channel quality. Upon the forwarding management entity 16 determining the channel quality as sufficient, data transfer is taken over via a WiFi link 24' between the user terminal 10 and the access point 6'. This situation is shown in Figures 4(c) and 5(c).

### Some variants

Of course, in a similar example, the user terminal may re-enter the cell 8 of the same WiFi access point 6 from which it moved, resulting in further data transfer via that WiFi access point.

In some examples, the access points are IEEE 802.11ad compliant (WiFi based on mm wave).

In some examples, the access points are small cell base stations, deployed to improve coverage and traffic capacity. These APs have small physical area footprints, and incorporate both a cellular telecommunications technology, namely LTE or 5G, and a wireless Local Area Network (LAN) interface, namely Wi-Fi.

In some embodiments instead of the macrocell base station, there may be a base station of another type, for example a metrocell or other small cell base station.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of maintaining a Transmission Control Protocol, TCP, session between a mobile user terminal and a network, comprising:
in a first phase, the mobile user terminal being connected to the network via both a wireless cellular communications link and a WiFi link and user data being sent via the WiFi link at a first rate;
in a second phase, the mobile user terminal being connected to the network node via a wireless cellular communications link but not a WiFi link;
wherein in the second phase, user data is sent via the wireless cellular communications link at a second rate that is both lower than the first rate and high enough to maintain the TCP session.

2. A method according to claim 1, in which the TCP session is defined at Layer 4 of the TCP/IP protocol stack model, and the wireless cellular link and WiFi link are defined at a lower layer in the protocol stack transparent to the TCP session definition.

3. A method according to claim 1 or claim 2, in which in a third phase, the mobile user terminal is connected to the network node via both a wireless cellular communications link and a WiFi link and user data is sent via the WiFi link at a rate higher than the second rate.

4. A method according to any preceding claim, in which the wireless cellular communications link is Long Term Evolution, LTE, or Fifth Generation, 5G, compliant.

5. A method according to any preceding claim, in which the network comprises a macrocell base station and at least one WiFi access point, the wireless cellular communications link passes via the macrocell base station and the or each WiFi link passing via one of the WiFi access points.

6. A method according to any preceding claim, in which the TCP session has a Best Effort, BE, Quality of Service, QoS, constraint.

7. A method according to any preceding claim, in which the second phase is entered dependent upon determining that the WiFi link no longer has an acceptable signal quality.

8. A method according to any preceding claim, in which the second phase is entered dependent upon determining that the WiFi link no longer has an acceptable channel capacity.

9. A controller configured to maintain a Transmission Control Protocol, TCP, session between a mobile user terminal and a network, comprising:
means to configure, in a first phase, the mobile user terminal to be connected to the network via both a wireless cellular communications link and a WiFi link and user data being sent via the WiFi link at a first rate;
means to configure in a second phase, the mobile user terminal to be connected to the network via a wireless cellular communications link but not a WiFi link;
wherein in the second phase, user data is sent via the wireless cellular communications link at a second rate that is both lower than the first rate and high enough to maintain the TCP session.

10. A controller according to claim 9 which operates at the Medium Access Control Layer of the TCP/IP Protocol stack.

11. A controller according to claim 9 or claim 10, which is configured to determine whether a WiFi link of acceptable signal quality is available, and dependent upon the result of that determination the WiFi link is configured.

12. A controller according to claim 11, which is configured to determine whether the WiFi link has an acceptable level of channel capacity, and dependent upon the result of that determination the WiFi link is configured.

13. A controller according to claim 12, which is configured to determine dependent on the channel capacity of the wireless cellular communications link whether to configure the WiFi link.

14. A controller according to any of claims 9 to 13, comprising a Forwarding Management Entity.

15. A controller according to any of claims 9 to 14, comprising a macrocell base station.
